# EUROPEAN PATENT SPECIFICATION

(11) **EP 0 952 393 B1**
(45) Date of publication and mention of the grant of the patent: **07.01.2004**
(21) Application number: 98302146.0
(22) Date of filing: 23.03.1998
(51) Int. Cl.: F23G 5/027, F23G 5/32, F23G 5/10, F23G 5/46

(54) **Method and apparatus for operating melting furnace in waste treatment facilities**
Verfahren und Vorrichtung zum Betrieb eines Schmelzofens in Abfallbehandlungsanlagen
Procédé et dispositif pour la mise en oeuvre d'un four de fusion dans les installations de traîtement des déchets

(43) Date of publication of application: 27.10.1999
(73) Proprietor: KABUSHIKI KAISHA KOBE SEIKO SHO also known as Kobe Steel Ltd., Kobe 651-0072 (JP)
(72) Inventor: Kawabata, Hiroaki, c/o Kobe Steel Ltd., Kobe-shi, Hyogo, 651-0072 (JP); Hosoda, Hiroyuki, c/o Kobe Steel Ltd., Kobe-shi, Hyogo, 651-0072 (JP); Suyari, Mamoru, c/o Kobe Steel Ltd., Nishi-ku, Kobe-shi, Hyogo, 651-271 (JP); Ito, Tadashi, c/o Kobe Steel Ltd., Nishi-ku, Kobe-shi, Hyogo, 651-271 (JP); Minoura, Tadayuki, c/o Kobe Steel Ltd., Nishi-ku, Kobe-shi, Hyogo, 651-271 (JP)
(74) Representative: Brookes Batchellor

(56) References cited:
- EP-A- 0 409 037
- FR-A- 2 641 993
- FR-A- 2 660 415
- FR-A- 2 695 985
- GB-A- 2 174 691
- US-A- 5 281 790
- PATENT ABSTRACTS OF JAPAN vol. 016, no. 380 (M-1295), 14 August 1992 & JP 04 124515 A (OSAKA GAS CO LTD;OTHERS: 01), 24 April 1992

## Description

### BACKGROUND OF THE INVENTION

### Field of the Invention

The present invention relates to a method and apparatus for operating a melting furnace in water treatment facilities for thermally pyrolizing industrial waste, municipal solid waste, and the like, in which the pyrolysis gases generated by pyrolysis are burnt to melt ashes contained in the gases.

### Description of the Related Art

In recent years, the calorific value of municipal solid waste has increased steadily. Studies of a reduction in waste volume by melting and stabilization of waste have proceeded from the viewpoints of problems with the tightness, the capacity, the final disposal sites, and secondary pollution (For example, ground water pollution), strengthening of law regulations, etc. Also, as in a law concerning recycling, measures for effectively utilizing waste, such as effective recovery of resources, recovery of unused energy, use of waste as resources, and the like have also been increasingly strengthened. Furthermore, in regard to stabilization of toxic substances, there are many problems with waste treatment, such as suppression of trace pollutants like DXN, etc.

Under these conditions, as means for solving the above problems, development of waste treatment facilities comprising of a pyrolysis furnace and a melting furnace has been actively proceeded (refer to, for example, Japanese Patent Unexamined Publication No. 61-105018). The pyrolysis furnace consist of a fluidized bed with a bottom layer of sand particles, while the waste fed into the fluidized bed is burned, it is fluidizing together with the sand particles to thermally decompose the waste into pyrolysis gases, char, ashes, and the like. The melting furnace functions to burn the combustible components and char in the pyrolysis gases. Through the heat of combustion, the ashes are melted and obtained as slag.

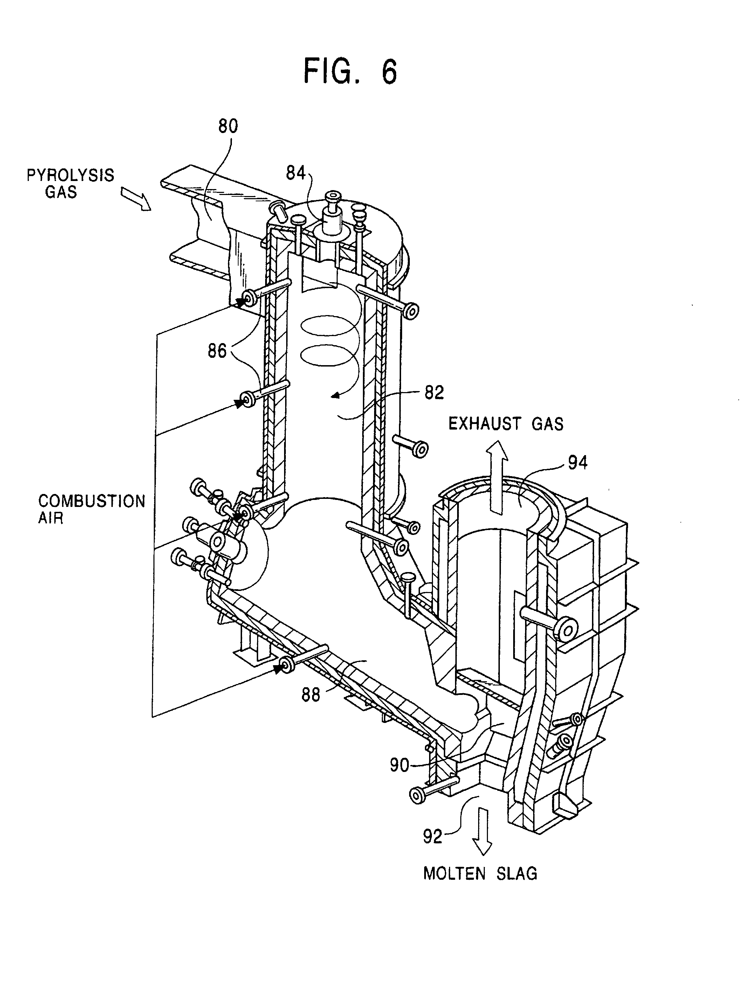

Fig. 6 shows an example of the melting furnace. In Fig. 6, the pyrolysis gases sent through a pipe (80) are introduced into a primary combustion chamber (82) located in the furnace portion, and the flame of a main burner (84) and combustion air injected from an air supply nozzle (86) are supplied to the combustion chamber (82). As a result, the combustible components and the char in the pyrolysis gases are ignited and then burnt in a secondary combustion chamber (88). The ashes in the gases are melted by combustion to form molten slag. The molten slag is discharged from a slag discharge portion (92) below the slag separation portion (90), while the remaining combustion gases are discharged as exhaust gases from a gas discharge portion 94 above the slag separation portion (90).

where the lower calorific value of the combustible components in the pyrolysis gases is low, in some cases, a quantity of heat sufficient to melt the ashes cannot be obtained only by combustion. Since the char is harder to ignite as compared with other combustible components, For example where a large amount of char is contained in the gases, there is a possibility that the char cannot be ignited only by the flame of the main burner.

Therefore, a method is conventionally employed in which auxiliary fuel is supplied to the melting furnace and is burnt by a pilot burner or the like to be used as an ignition source. This compensates for the shortage of the quantity of heat.

However, when such auxiliary fuel is used, the combustion air must be further introduced into the furnace air ratio to auxiliary fuel at 1.1 or more. This causes the problem of deteriorating heat efficiency due to an increase in the quantity of the heat carried away by the exhaust gases. Also, since the amount of the exhaust gases is increased, the required capacity of an exhaust treatment facility on the downstream side is increased. This results in having to increase the size and cost of the entire facility.

### SUMMARY OF THE INVENTION

In consideration of the above situation, a purpose of the present invention is to provide a method and apparatus for operating a melting furnace in waste treatment facilities, which are capable of ensuring good ignitionability and a sufficient quantity of heat in the melting furnace while eliminating the need for supplementary fuel or significantly decreasing the amount of the supplementary fuel supplied.

As means for solving the above problems, the present invention provides a method of operating a melting furnace in waste treatment facilities comprising a pyrolysis furnace for thermally pyrolizing the fed waste, and a melting furnace for combusting the pyrolysis gas discharged from the pyrolysis furnace to melt the ash included in the gas, the method includes a plasma heating system which increases the temperature of the melting furnace in order to ignite the combustible components and char in the pyrolysis gas, and melting the ash by utilizing the heat generated by combustion; characterised in that the method further comprises the step of supplying air for forming a swirl of combustion air in a combustion chamber of the melting furnace, wherein plasma is blown in substantially the same direction as the normal line of the swirl.

In this method, the plasma reaches a very high temperature, as compared with the flame supplied from, for example, a burner. The plasma also has a high heat density. Therefore, even if the pyrolysis gases introduced into the melting furnace contain a relatively large amount of char, the char can be securely ignited. Even if the lower calorific value of the combustible components in the gases is low, the ashes can sufficiently be melted by the heat generated from the plasma.

Furthermore, since the plasma can be produced by utilizing electric energy, steam that is generated by the heat of the exhaust gases from the melting furnace. The energy of the stream is converted into electric energy so that the electric energy can be recycled as an energy source for generating the plasma.

The present invention also provides an apparatus for operating the melting furnace in the waste treatment facilities wherein the melting furnace is equipped with a plasma torch for blowing the plasma, as a heat source into the melting furnace, and air supply means for forming a swirl of combustion air, wherein the plasma torch is arranged to blow the plasma in substantially the same direction as in normal line of the swirl.

The apparatus is also equipped with a boiler for generating steam. This is done by utilizing the heat possessed by the exhaust gases of the melting furnace. A generator is installed for converting the energy of the steam into electric energy. The electric energy is used as a driving source to the plasma torch.

The position and direction of the plasma torch may be appropriately set. An air supply is used to create a swirl in the combustion chamber of the melting furnace. The plasma torch is arranged to blow the plasma in substantially the same direction as the normal line of the swirl. The swirl can be strengthened by utilizing the plasma flow blown at a high speed, with a corresponding increase in the residence time of the ash particles in the combustion chamber. Therefore, the ash particles can securely be melted during passage through the combustion chamber.

### BRIEF DESCRIPTION OF THE DRAWINGS

Fig. 1 is a sectional front view of a melting furnace in waste treatment facilities in accordance with a first embodiment of the present invention;
Fig. 2 is a sectional plan view of a combustion chamber of the melting furnace shown in Fig. 1;
Fig. 3 is a drawing of the whole construction of waste treatment facilities;
Fig. 4 is a sectional front view of a melting furnace in waste treatment facilities in accordance with a second embodiment of the present invention;
Fig. 5 is a sectional plan view of a combustion chamber of the melting furnace shown in Fig. 4; and
Fig. 6 is a sectional view showing an example of melting furnace in conventional waste treatment facilities.

### DESCRIPTION OF THE PREFERRED EMBODIMENT

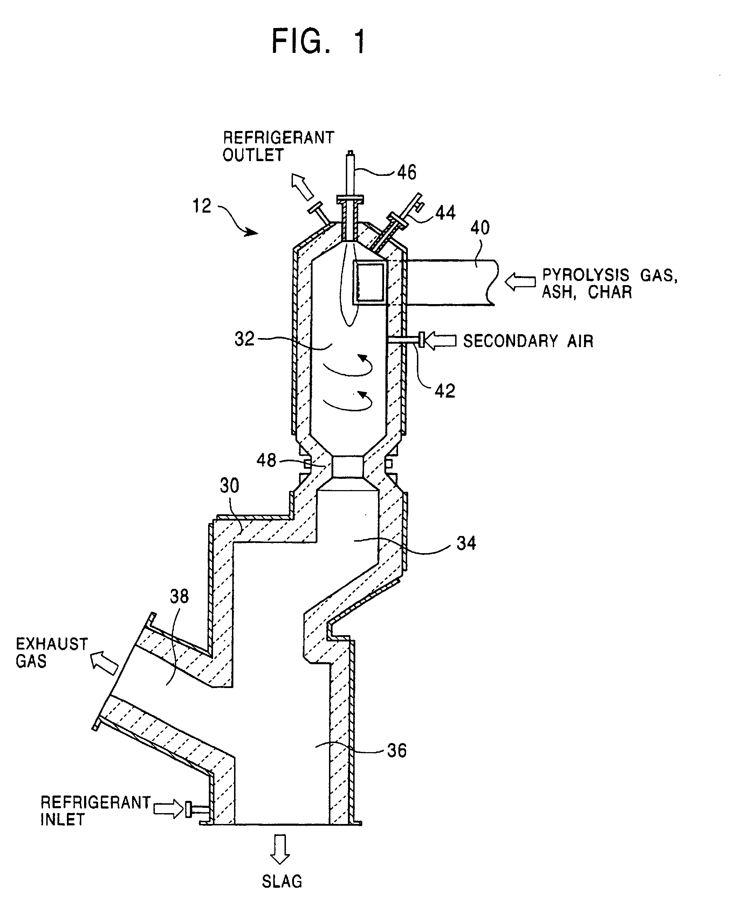

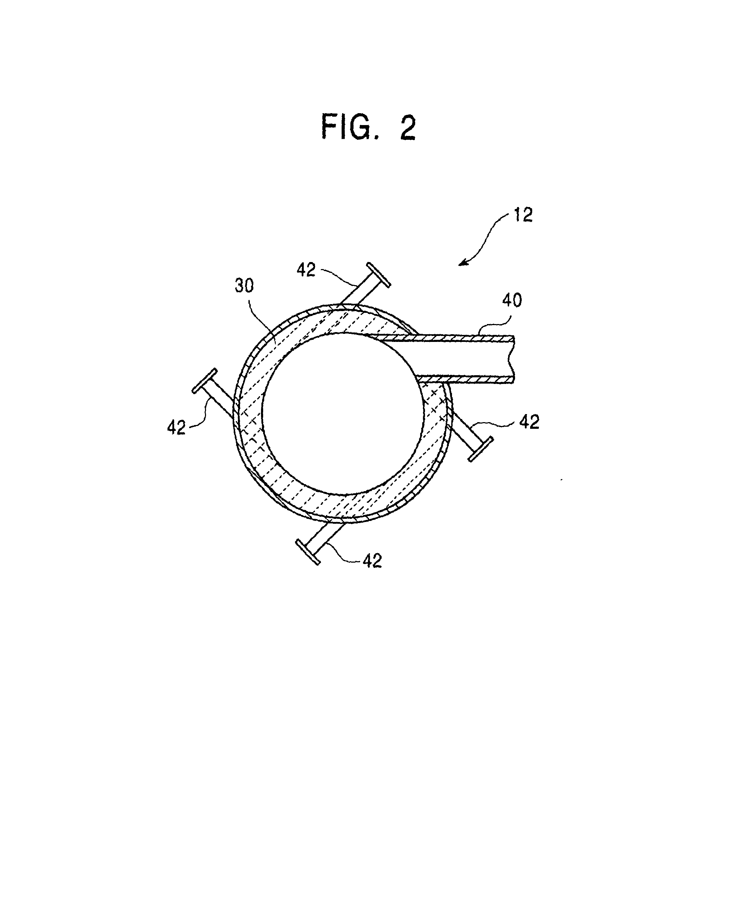

A first embodiment of the present invention is described with reference to Figs. 1 to 3.

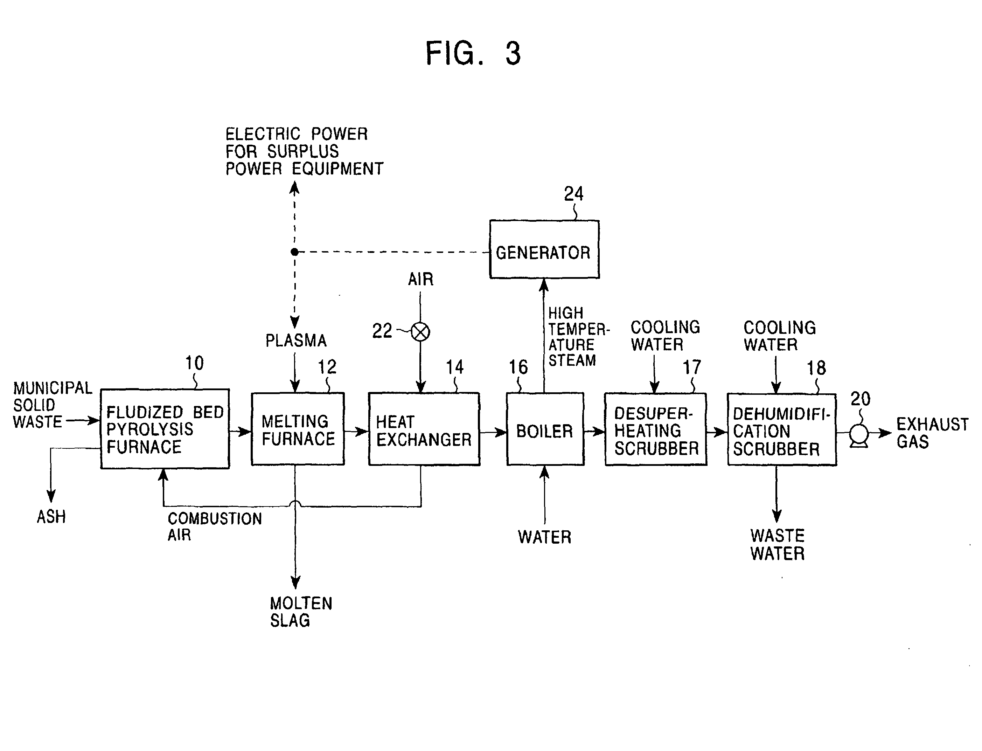

The waste treatment facilities shown in Fig. 3 comprise a fluidized bed pyrolysis furnace (10), a melting furnace (12), a heat exchanger (14), a boiler (16), a desuperheating scrubber (exhaust gas treatment means) (17), a dehumidification scrubber (exhaust gas treatment means) (18), and a induced draft fan 20, which are provided in turn from the upstream side.

The fluidized bed pyrolysis furnace (10) has a fluidized bed comprising sand particles at the bottom. This process pyrolizing the waste fed to the fluidized bed to discharge pyrolysis gases containing ashes and char. A conventional known fluidized bed pyrolysis furnace can be applied to the fluidized bed pyrolysis furnace (10). However, the pyrolysis furnace of the present invention is not limited to the fluidized bed type, and any type can be used as long as waste is thermally decomposed.

The melting furnace (12) functions to further burn the pyrolysis gases discharged from the fluidized bed pyrolysis furnace (10), and melt the ashes in the gases by utilizing the heat generated by combustion to discharge slag. The melting furnace (12) has such a structure as shown in Fig. 1.

As shown in Fig. 1, the furnace wall is covered with a refractory material (30). The melting furnace consists of the following components, from top to bottom; a combustion chamber (32), a slag separation portion(34), with a slag discharge port (36), an exhaust gas discharge port (38) provided in the lower portion of the slag separation portion (34). The upper portion of the combustion chamber (32) is connected to a pipe (40) that extends from the fluidized bed thermal decomposition furnace (10), with a plurality of secondary air injection nozzles (air supply means) (42) provided below the pipe (40). The direction of these secondary air injection nozzles (42) is set to form a swirl in the combustion chamber (32) by injecting secondary air in the direction close to the normal line of the furnace wall which has a circular sectional shape. Also a starting burner (44) is located above the pipe (40).

The melting furnace (12) is also equipped with a plasma torch (46). The plasma torch (46) functions to generate a strong discharge in the torch to inject a plasma downward toward the center of the swirl. A non-transfer type and transfer type can be applied to the plasma torch. In the transfer type, for example, an electrode may be arranged at an intermediate narrow part of the furnace.

The heat exchanger (14) functions to heat the combustion air is supplied to the fluidized bed pyrolysis furnace (10) by utilizing the heat possessed by the high temperature combustion gases discharged from the melting furnace (12).

The boiler (16) evaporates water by utilizing the heat of the exhaust gases sent from the heat exchanger (14). The steam generated by the boiler (16) is supplied to the generator (24) so that a steam turbine of the generator (24) is rotated by the energy possessed by the stream. Electric energy is generated by rotation of the steam turbine, and part of the electric energy is supplied as an electric source to the plasma torch (46) provided on the melting furnace (12). The residue is recovered as surplus power or electric power for the facilities.

The desuperheating scrubber (17) desuperheats the exhaust gases sent from the boiler (16) by contact between the exhaust gases and cooling water, settles dust in the gases and removes it. The dehumidification scrubber (18) further desuperheats the exhaust gases to condense water vapor (steam) in the exhaust gases, and remove water from the exhaust gases.

Next, the operation of the waste treatment facilities is described.

First, The waste, such a municipal solid waste, is fed into the fluidized bed pyrolysis furnace (10) is primarily burnt by the fluidized bed. The gases generated by combustion flow upward from the fluidized bed and are discharged as pyrolysis gases containing ashes and char. The pyrolysis gases are introduced into the combustion chamber (32) of the melting furnace (12) through the pipe (40).

In the combustion chamber (32), the pyrolysis gases swirl together with secondary air, and a high temperature plasma is blown to the center of the swirl from the plasma torch (46). The combustible components and the char in the pyrolysis gases are ignited by the plasma, and the ashes in the gases are melted by the heat generated by combustion and the heat possessed by the plasma to form slag. The melted slag is separated from the combustion gases in the lower slag separation portion (34), and the combustion gases are discharged from the exhaust gas discharge port (38), while the melted slag is discharged from the slag discharge port (36).

When the lower calorific value of the combustible components in the pyrolysis gases is low, or when the char content is high, a conventional melting furnace comprising only of a burner as an ignition source requires a supply of auxiliary fuel, and combustion air corresponding to the auxiliary fuel to the furnace in order to ensure a sufficient amount of heat to melt the ashes or securely perform ignition. However, when a high temperature plasma is used as an ignition source, as described above, the plasma reaches a high temperature (the center 10000°C, the periphery 2000°C), as compared with the flame of the burner, the char can be ignited without combustion of the auxiliary fuel. A sufficient quantity of heat to melt the ashes can also be supplied by the plasma.

In the melting furnace (12), not only is auxiliary fuel not necessary but also combustion air corresponding to the amount of the auxiliary fuel supplied is not needed. The lack of combustion air can significantly decrease the quantity of the heat carried away by the exhaust gases, thus improving thermal efficiency. Since the amount of the exhaust gases is also decreased, the boiler (16), both scrubbers (17) and (18) and the induced draft fan (20) does not require a high capacity, therefor reducing the size and cost of the entire facility.

The high temperature combustion gases (exhaust gases) discharged from the exhaust gas discharge port (38) of the melting furnace (12) are subjected to heat exchange with the combustion air in the heat exchanger (14), passed through the boiler (16) for evaporating water and through the both scrubbers (17) and (18) for desuperheating, and then discharged to the outside of the system by the fan (20). The water vapor (steam) generated in the boiler (16) is used for rotating the steam turbine of the generator (24) to generate electric energy, part of which is supplied as a driving source to the plasma torch (46) of the melting furnace (12). In the waste treatment facilities, the energy possessed by the high temperature combustion gases discharged from the melting furnace (12) can be recycled as ignition electric power in the melting furnace (12), with a corresponding improvement in operation efficiency.

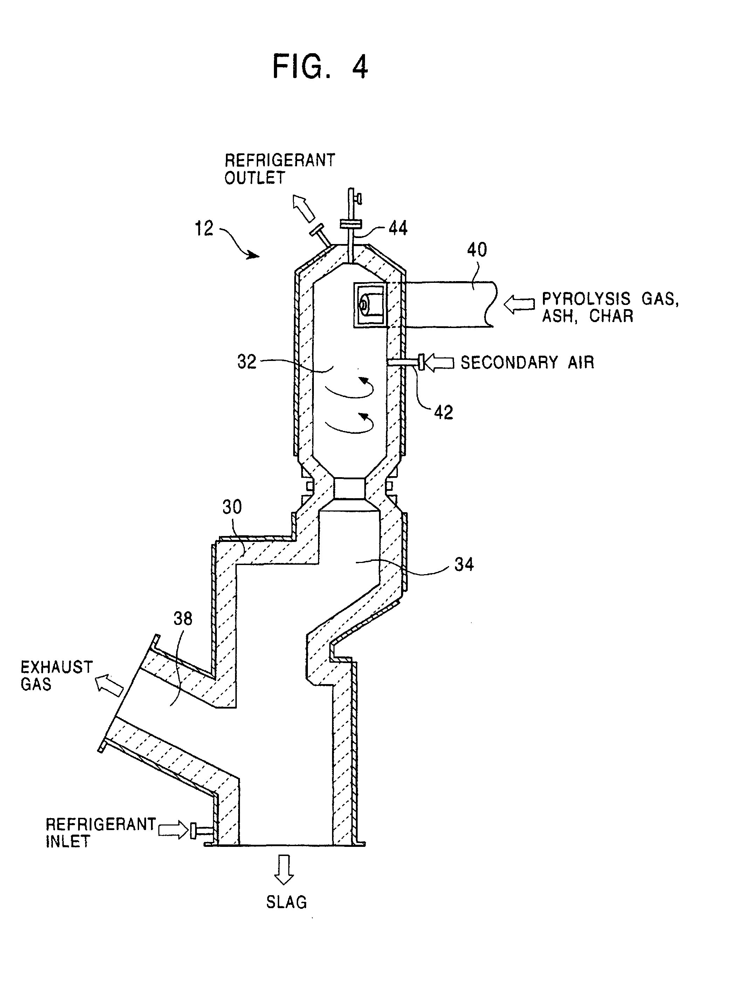

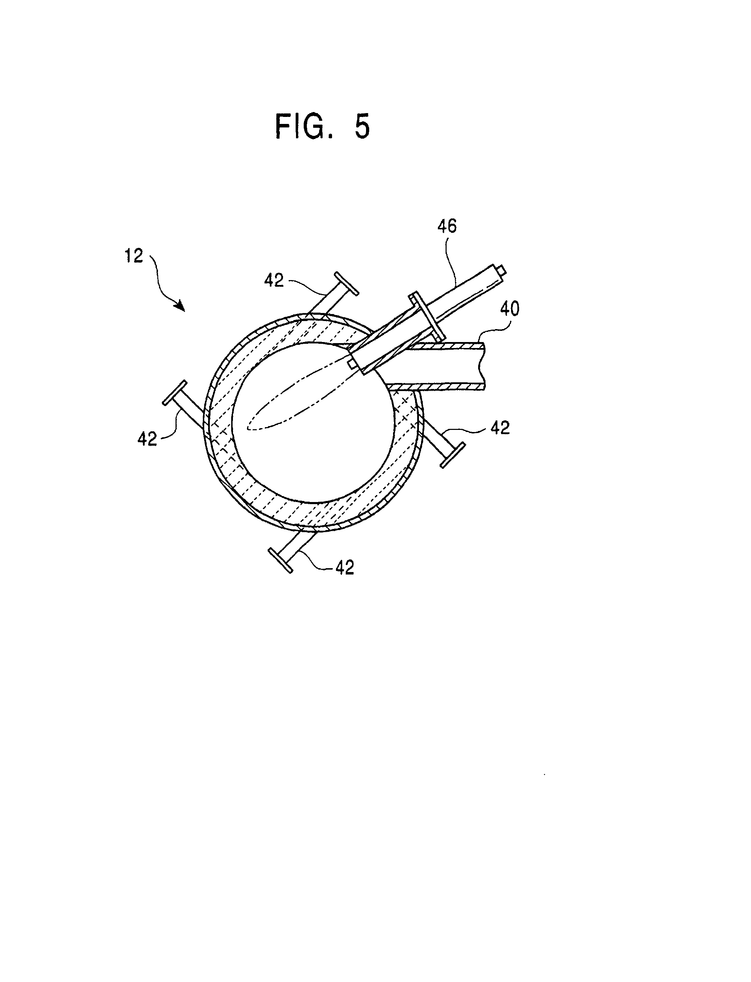

Figs. 4 and 5 show a second embodiment. In this embodiment, the plasma torch (46) is fixed to the side wall of the furnace parallel to the pipe (40), for injecting a plasma substantially horizontally. The direction of the plasma injection is set to the same direction as the normal line of the secondary air. A range is set a range in which the plasma does not directly contact the inner wall.

When the blowing direction of the plasma is substantially the same as the direction normal to the swirl, the swirl in the combustion chamber (32) can be strengthened by utilizing high-speed blowing of the plasma (generally, a flow rate of 200 m/s or more), and the residence of ash particles in the combustion chamber (32) can be prolonged by strengthening the swirl, thereby obtaining the advantage that the ash particles can securely be melted during passage through the combustion chamber (32).

Although, in each of the above embodiments, the case where no auxiliary fuel is supplied to the melting furnace (12) is described, in the present invention, both the plasma torch (46) and auxiliary fuel may be used. In this case, the amount of the auxiliary fuel supplied can be significantly decreased, as compared with a conventional melting furnace, and thus the same effect as described above can be obtained.

In the present invention, the plasma torch (46) is not necessarily immovably fixed to the furnace wall, and may be provided so that the position thereof can be axially adjusted. The plasma torch (46) may also be made oscillatable so that the blowing direction of the plasma can finely be adjusted.

As described above, in the present invention, in waste treatment facilities in which thermal decomposition gases are introduced into a melting furnace from a thermal decomposition furnace, a plasma is blown as a heat source into the melting furnace to ignite the combustible components and char in the thermal decomposition gases, and the ashes are melted by the heat generated by combustion. Therefore, the invention has the effects of eliminating the need for supply of auxiliary fuel into the melting furnace, significantly decreasing the amount of the auxiliary fuel supplied, securely performing ignition in the melting furnace and ensuring a necessary quantity of heat for melting the ashes.

Also water vapor (steam) is generated by the heat possessed by the exhaust gases of the melting furnace, and the energy of the water vapor (steam) is converted into electric energy which can be recycled as an energy source for generating the plasma, therefor, significantly improving the total operation efficiency of the facilities.

In addition, by using an air supply that means forms a swirl of combustion air in the combustion chamber of the melting furnace, and by arranging the plasma torch to blow the plasma in the same direction as the normal line of the swirl, the swirl can be strengthened. This results in the through melting of the ashes.

## Claims

1. A method of operating a melting furnace in waste treatment facilities comprising a pyrolysis furnace for thermally pyrolizing the fed waste, and a melting furnace for combusting the pyrolysis gas discharged from the pyrolysis furnace to melt the ash included in the gas, the method includes a plasma heating system which increases the temperature of the melting furnace in order to ignite the combustible components and char in the pyrolysis gas, and melting the ash by utilizing the heat generated by combustion; **characterised in that** the method further comprises the step of supplying air for forming a swirl of combustion air in a combustion chamber of the melting furnace, wherein plasma is blown in substantially the same direction as the normal line of the swirl.

2. A method of operating a melting furnace in waste treatment facilities according to Claim 1, further includes generating steam by the heat possessed by the exhaust gas of the melting furnace, converting the energy of the steam into electric energy, and generating the plasma by utilizing the electric energy.

3. An apparatus for operating a melting furnace in waste treatment facilities comprising a pyrolysis furnace for thermally pyrolizing decomposing the fed waste, and a melting furnace for combusting the pyrolysis gas discharged from the pyrolysis furnace to melt the ash included in the gas, the apparatus comprising a plasma torch installed in the melting furnace, for blowing a plasma as a heat source into the melting furnace, **characterised in that** the apparatus further comprises air supply means for forming a swirl of combustion air in a combustion chamber of the melting furnace, wherein the plasma torch is arranged to blow the plasma in substantially the same direction as the normal line of the swirl.

4. An apparatus for operating a melting furnace in waste treatment facilities according to Claim 3, further comprising a boiler for generating water vapor (steam) by utilizing the exhaust gas of the melting furnace, and a generator for converting the energy of the water vapor (steam) into electric energy and supplying the electric energy as a driving source to the plasma torch.

## Patentansprüche

1. Verfahren zum Betrieb eines Schmelzofens in Abfallbehandlungsanlagen, umfassend einen Pyrolyseofen zum thermischen Pyrolysieren des zugeführten Abfalls und einen Schmelzofen, um das Pyrolysegas, das von dem Pyrolyseofen ausgetragen wird, zu verbrennen, um die Asche, die in dem Gas enthalten ist, zu schmelzen, wobei das Verfahren ein Plasmaheizsystem beinhaltet, welches die Temperatur des Schmelzofens erhöht, um die verbrennbaren Komponenten und Kohle in dem Pyrolysegas zu zünden, und die Asche durch Verwenden der Wärme, die durch die Verbrennung gebildet wird, zu schmelzen, **dadurch gekennzeichnet, daß** das Verfahren weiters den Schritt eines Zuführens von Luft umfaßt, um einen Wirbel von Verbrennungsluft in einer Verbrennungskammer des Schmelzofens auszubilden, worin Plasma im wesentlichen in derselben Richtung wie die Normallinie des Wirbels geblasen wird.

2. Verfahren zum Betrieb eines Schmelzofens in Abfallbehandlungsanlagen nach Anspruch 1, weiters umfassend ein Erzeugen von Dampf durch die Wärme, die in dem Abgas bzw. Austragsgas des Schmelzofens enthalten ist, ein Umwandeln der Energie des Dampfes in elektrische Energie, und ein Generieren bzw. Erzeugen des Plasmas unter Verwendung der elektrischen Energie.

3. Vorrichtung zum Betrieb eines Schmelzofens in Abfallbehandlungsanlagen, umfassend einen Pyrolyseofen zum thermischen pyrolysierenden Zersetzen des zugeführten Abfalls, und einen Schmelzofen, um das Pyrolysegas, das von dem Pyrolyseofen ausgetragen ist, zu verbrennen, um die Asche, die in dem Gas enthalten ist, zu schmelzen, wobei die Vorrichtung eine Plasmafackel bzw. - brenner umfaßt, die in dem Schmelzofen installiert ist, um ein Plasma als eine Wärmequelle in den Schmelzofen zu blasen, **dadurch gekennzeichnet, daß** die Vorrichtung weiters Luftzufuhrmittel zum Ausbilden eines Wirbels von Verbrennungsgas bzw. -luft in einer Verbrennungskammer des Schmelzofens umfaßt, worin die Plasmafackel angeordnet ist, um das Plasma in im wesentlichen derselben Richtung wie die Normallinie des Wirbels einzublasen.

4. Vorrichtung zum Betrieb eines Schmelzofens in Abfallbehandlungsanlagen nach Anspruch 3, weiters umfassend eine Wasserheizeinrichtung bzw. einen Boiler, um Wasserdampf (Dampf) unter Verwendung des Abfallgases des Schmelzofens zu erzeugen, und einen Generator, um die Energie des Wasserdampfes (Dampf) in elektrische Energie umzuwandeln und die elektrische Energie als eine Antriebsquelle zu der Plasmafackel zuzuführen.

## Revendications

1. Procédé d'utilisation d'un four de fusion dans des installations de traitement de déchets comprenant un four de pyrolyse, afin de procéder, par voie thermique, à la pyrolyse des déchets amenés, et un four de fusion pour la combustion des gaz de pyrolyse provenant du four de pyrolyse, afin de faire fondre les cendres contenues dans les gaz, le procédé comprenant un système de chauffage au plasma, qui augmente la température du four de fusion afin de pouvoir embraser les éléments constitutifs combustibles et les produits de carbonisation présents dans les gaz de pyrolyse, et pour faire fondre les cendres en utilisant la chaleur produite par la combustion, **caractérisé en ce que** le procédé comprend en outre les étapes d'amenée d'air, afin de former un tourbillon d'air de combustion dans une chambre de combustion du four de fusion, le plasma étant injecté sensiblement dans la même direction que la normale au tourbillon.

2. Procédé d'utilisation d'un four de fusion dans des installations de traitement de déchets selon la revendication 1, comprenant en outre la production de vapeur par la chaleur contenue dans les gaz d'échappement du four de fusion, la transformation de l'énergie de la vapeur en de l'énergie électrique, et la formation du plasma en utilisant l'énergie électrique.

3. Dispositif pour l'utilisation d'un four de fusion dans des installations de traitement de déchets comprenant un four de pyrolyse, afin de procéder, par voie thermique, à la pyrolyse des déchets amenés, et un four de fusion pour la combustion des gaz de pyrolyse provenant du four de pyrolyse, afin de faire fondre les cendres contenues dans les gaz, le dispositif comprenant une torche à plasma, montée dans le four de fusion pour injecter un plasma, en tant que source de chaleur, dans le four de fusion, **caractérisé en ce que** le dispositif comprend en outre des moyens d'alimentation en air pour former un tourbillon d'air de combustion dans une chambre de combustion du four de fusion, la torche à plasma étant prévue pour injecter le plasma sensiblement dans la même direction que la normale au tourbillon.

4. Dispositif pour l'utilisation d'un four de fusion dans des installations de traitement de déchets selon la revendication 3, comprenant en outre une chaudière pour produire de la vapeur d'eau, en utilisant les gaz d'échappement du four de fusion, et un générateur pour transformer l'énergie de la vapeur d'eau en de l'énergie électrique, et pour fournir l'énergie électrique, en tant que source d'excitation, à la torche à plasma.
